(19) Europäisches Patentamt
European Patent Office
Office européen des brevets

(11) **EP 2 018 694 B1**

(12) **EUROPEAN PATENT SPECIFICATION**

(45) Date of publication and mention
of the grant of the patent:
**14.10.2009 Bulletin 2009/42**

(21) Application number: **07729237.3**

(22) Date of filing: **16.05.2007**

(51) Int Cl.:
*H02H 3/40* (2006.01)     *H02J 3/24* (2006.01)

(86) International application number:
**PCT/EP2007/054789**

(87) International publication number:
**WO 2007/135073 (29.11.2007 Gazette 2007/48)**

(54) **DETECTING FAULTS IN POWER SYSTEMS**

FEHLERERKENNUNG IN STROMSYSTEMEN

DÉTECTION DE DÉFAILLANCES DANS DES SYSTÈMES D'ALIMENTATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.05.2006 US 801435 P**

(43) Date of publication of application:
**28.01.2009 Bulletin 2009/05**

(73) Proprietor: **ABB RESEARCH LTD.**
**8050 Zürich (CH)**

(72) Inventors:
• **KORBA, Petr**
  **CH-5300 Turgi (CH)**
• **BACCHINI, Gino**
  **CH-8162 Sünikon/Steinmaur (CH)**
• **BULATY, Pavel**
  **CH-5430 Wettingen (CH)**
• **SCHOLTZ, Ernst**
  **Raleigh, North Carolina (US)**

(74) Representative: **ABB Patent Attorneys**
**C/o ABB Schweiz AG**
**Intellectual Property (CH-LC/IP),**
**Brown Boveri Strasse 6**
**5400 Baden (CH)**

(56) References cited:
**EP-A- 1 489 714          US-A- 4 812 995**

• **SEGUI T ET AL: "Fundamental Basis for Distance Relaying with Parametrical Estimation" IEEE TRANSACTIONS ON POWER DELIVERY, IEEE SERVICE CENTER, NEW YORK, NY, US, vol. 15, no. 2, April 2000 (2000-04), XP011049848 ISSN: 0885-8977**

## Description

### FIELD OF THE INVENTION

The invention relates to the field of electric power transmission and distribution. It is concerned with a fast and accurate detection of faults in power systems.

### BACKGROUND OF THE INVENTION

Power systems comprise electric power transmission and distribution networks connecting generators and loads in geographically separated regions, as well as substations for transforming voltages and for switching connections between different lines of the network. Power system protection is concerned with the detection of faults or other contingencies in the power system and the elaboration of a proper reaction. A key issue in power system protection is a protection device's speed and accuracy in detecting a fault and in responding there to. Conventional algorithms for protection are based on phasor quantities of voltages and currents, from which the actual impedance, resistance and/or reactance of a line are calculated in order to evaluate the actual operating characteristics. Algorithms of this kind are implemented e.g. in digital relays for distance line protection with the task to disconnect a protected transmission line when the operating point as characterized by the calculated resistance and reactance values of the line trespasses an admissible range or a predefined safe-operating area.

The phasor quantities mentioned are obtained by way of transforming a sampled signal defined in time domain, such as the voltage u(k) or current i(k) at the digital relay, into a signal in frequency domain by means of discrete Fourier Transform (FT). FT utilizes information about the fundamental or line frequency (50 Hz or 60 Hz) and the sampling frequency, which are both assumed to be constant and known a-priori. Likewise, the amplitude of the periodic signal during the evaluation window is assumed constant, basically excluding transients in the power system during the FT calculation. FT is characterized by the fact that an entire cycle (of e.g. 20 ms) of data samples is required after a fault in order for any transient behaviour of FT to converge reliably. This is also true for higher sampling frequencies. Hence, more powerful hardware, in terms of both computational processing power and signal acquisition, for digital relays or protection devices, will not automatically lead to an increased performance of this device. Marginally faster responses with FT can be obtained when a shorter window length is applied. However, the price to be paid for the slightly increased speed is much higher noise sensitivity and lower precision of the estimated parameters.

The patent US 4455612 proposes a remedy to the drawbacks of FT by reverting to a recursive calculation of phasors at the fundamental frequency, i.e. the first harmonic, of the post-fault signal. In particular, instead of FT, direct parameter estimation *in the time-domain* by means of Kalman Filtering techniques (KF) is used to estimate the voltage and current phasors. The recursive nature of the method permits an updated estimate of the phasors to be made utilizing the single latest voltage sample of data and the previous estimate, thereby utilizing all of the information in all previous post-fault samples. The measured signal is assumed to be of a certain form for which a stochastic state space model is defined with the states being independent Gaussian random variables which together provide the phasor of the signal at the fundamental or line frequency $f$ = 50 Hz or 60 Hz, i.e. a current or voltage waveform sinusoid estimate. From the phasors, as in the earlier FT approach, the impedance

$$Z = \frac{V_{phasor}}{I_{phasor}} = R + j \cdot X = R + j \cdot 2\pi \cdot f \cdot L \, ,$$

with $f$ = 50 Hz or 60 Hz, is evaluated. From an analysis of the line resistance $R$ finally, a distance to the fault and/or a fault resistance can be derived.

In the patent application EP 1489714, a dynamic system quantity or signal such as e.g. amplitude or angle of the voltage or current at a selected node of the network is sampled, i.e. measured at discrete time intervals, and a series comprising several of the measured values of said system quantity is generated. From this series, parameters of a parametric model representing the dynamic behaviour of a power transmission system, or a particular aspect thereof, are estimated. This process is carried out in an adaptive manner, i.e. every time a new value of the system quantity is measured, the parameters of the model are recursively updated by means of recursive least square (RLS) or adaptive Kalman Filtering (KF) techniques. Finally, as the estimated and updated parameters per se as well as the parametric model have no physical significance, further quantities such as oscillation and damping of oscillatory modes of the power system are computed in a non-recursive manner there from. This process enables an almost instantaneous analysis of the oscillatory state of the power system as compared to a non-adaptive identification process relying on the analysis of sampled data collected over a time-window of several minutes and evaluated only at the end of this time-window.

The parametric model used in this case has a dynamical order n equal to the number of parameters to be estimated, wherein the dynamical order is selected for the purpose of optimally divulging the oscillation phenomena. It results in a linear difference equation containing only n parameters and is suitable to represent frequency spectra with narrow peaks.

DESCRIPTION OF THE INVENTION

It is an objective of the invention to enable faster response and increased accuracy in power system protection. This objective is achieved by a method and a device for detecting a fault in a power system according to the claims 1 and 6. Further preferred embodiments are evident from the dependent patent claims.

According to the present invention, a fault, instability or other contingency potentially requiring some protective action, such as line tripping or load adaptation, is detected in a fast and precise way by tracking a non-frequency-selective evolution of a physical parameter in time domain. By reverting to a physical parameter having an imminent physical significance, no additional analysis is required to divulge a fault or contingency, hence the speed of fault detection increases. Due to the skin affect in electrical conductors, a time domain analysis covering a broad range of frequencies includes more information than an analysis confined to the fundamental or line frequency, hence the accuracy of the fault detection increases.

In particular, the method comprises repeatedly measuring or sampling a dynamic system quantity $y$ of the power system, such as the amplitude or angle of the voltage or current at a selected node, and generating a series of measured or sampled values of the dynamic system quantity. A frequency in-selective system or circuit parameter, such as an impedance $Z$, a resistance $R$, a reactance $X$ or an inductance $L$ of a particular power transmission line of the power system, is estimated, and the estimated parameter value is updated recursively based on the most recently acquired value of the dynamic system quantity. In other words, the physical system parameter, belonging to a physically motivated, discrete-time model for the power system or a part there of, is directly estimated. An analysis of the ultimately estimated or updated physical parameter, such as a threshold comparison or a trend display, then allows identifying faults and initiating protection actions.

In a preferred variant of the invention, a vector of algebraic or otherwise invertible combinations of at least two physical parameters is estimated recursively, and the result is solved or inverted in order to determine the physical parameters. In another preferred embodiment of the invention, the physically motivated, discrete-time model for the power system is linear in the wanted parameters, and the recursive step is performed by means of an adaptive Kalman Filter.

All or part of the steps of the method for detecting a fault in a power system may be implemented as programmed software modules or procedures, i.e. as computer program code means for controlling one or more processors of a device for detecting a fault in a power system, wherein the modules or procedures may be stored in a computer readable medium, either in a memory integrated in said device or on a data carrier that can be inserted into said device.

BRIEF DESCRIPTION OF THE DRAWINGS

The subject matter of the invention will be explained in more detail in the following text with reference to preferred exemplary embodiments which are illustrated in the attached drawings, in which:

Fig. 1    shows a simplified power system model with the parameters to be estimated; and
Fig.2    compares the result of a classical phasor approach in the frequency domain (FT) with a direct parameter estimation approach in the time domain (KF).

DETAILED DESCRIPTION OF PREFERRED EMBODIMENTS

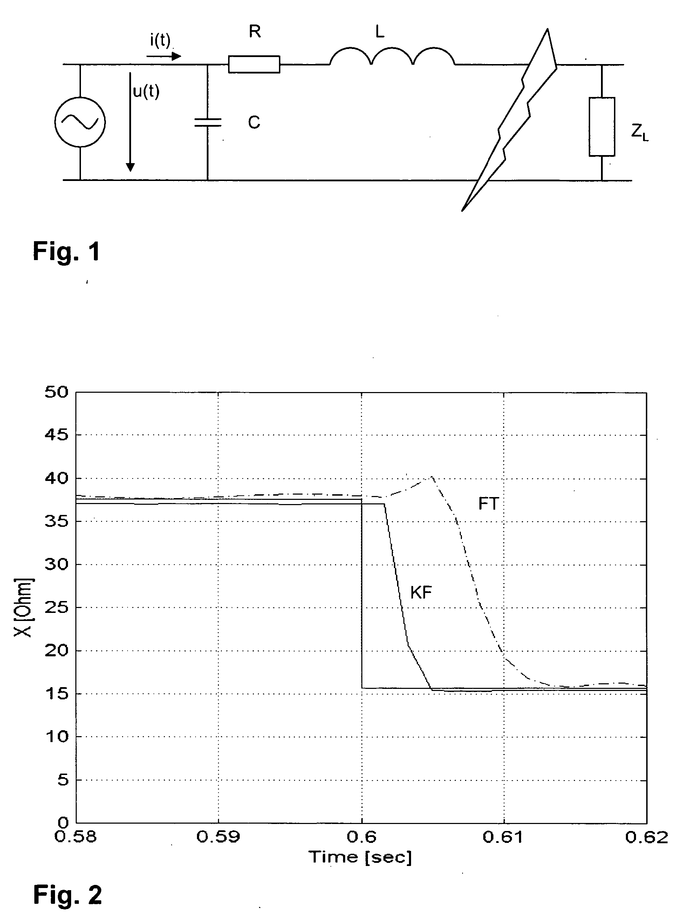

Fig.1 shows a simplified physical model of a power transmission line with the physical parameters R and L to be determined. At a generation end to the left, instantaneous values of the voltage $u$ and the current $i$ are measured. The transmission section is characterized by capacitance C, resistance R and inductance L. On a consumer end to the right, a steady state load impedance $Z_L$ might be bypassed by a fault occurring in the transmission section as indicated by the lightning bolt. If the capacitance C is very small and can be neglected, this model is characterized by (eq.1) below.

$$u(t) = Ri(t) + L\frac{di(t)}{dt} \qquad\qquad (eq.1)$$

The problem of finding the parameters *R* and *L* from measured instantaneous values of *u* and *i* such that these parameters fit optimally the selected model (eq.1) can be recast into an optimal filtering problem employing e.g. KF techniques. Since only instantaneous measurements of voltage *u(t=kT$_S$)* and current *i(t=kT$_S$)* are available once per sampling period *T$_s$*, the model for parameter estimation must be discretized using a suitable approximation of the integration. Here, the Tustin approximation $s = \dfrac{2}{T_s}\dfrac{z-1}{z+1}$ has been used. This leads to the following equivalent discrete time model

$$u(k) = -u(k-1) + \left[\frac{2L+RT_s}{T_s}\right]i(k) + \left[\frac{RT_s-2L}{T_s}\right]i(k-1) = \theta^T\varphi \qquad (eq.2)$$

Denoting the vector of the estimated parameters θ, the vector of measurements φ and introducing the predicted filter output $\hat{y}(k)$, wherein $\hat{y}(k)=T_s[u(k)+u(k-1)]$, as well as the measured filter output *y(k)*, one can rewrite (eq.2) as

$$\hat{y}(k) = \begin{bmatrix} \theta_1 & \theta_2 \end{bmatrix}\begin{bmatrix} i(k) \\ i(k-1) \end{bmatrix} \qquad (eq.3)$$

with the estimated parameter vector θ given by

$$\theta = \begin{bmatrix} RT_s+2L & RT_s-2L \end{bmatrix} \qquad (eq.4)$$

This can be rewritten or inverted as

$$\begin{bmatrix} \theta_1 & \theta_2 \end{bmatrix} = \begin{bmatrix} R & L \end{bmatrix}\begin{bmatrix} T_s & T_s \\ 2 & -2 \end{bmatrix} \qquad (eq.5)$$

and the solution for the estimated physical parameters [R L] is given by

$$\begin{bmatrix} R & L \end{bmatrix} = \begin{bmatrix} \theta_1 & \theta_2 \end{bmatrix}\begin{bmatrix} T_s & T_s \\ 2 & -2 \end{bmatrix}^{-1} = \begin{bmatrix} \theta_1 & \theta_2 \end{bmatrix}\begin{bmatrix} \dfrac{1}{2T_s} & \dfrac{1}{4} \\ \dfrac{1}{2T_s} & -\dfrac{1}{4} \end{bmatrix} \qquad (eq.6)$$

In more detail, standard Kalman Filtering techniques solve recursively an optimal identification problem of the model parameters $a_i$ and $b_i$ that are stored in the parameter vector θ and replace the physical parameters R and L of the present application, i.e.

$$\theta = \begin{bmatrix} a_1,...,a_n,b_0,...,b_m \end{bmatrix}^T$$

The input and the output signal, respectively, are denoted as u(k) and y(k) and collected in the measurement vector φ and replace the instantaneous measurement i(k) and u(k), respectively, of the present application, i.e.

$$\varphi(k) = \left[ y(k-1), ..., y(k-n), u(k), ..., u(k-m) \right]^{T}$$

Hence, in the ARX model, the output estimated by the model at step k reads

$$\hat{y}(k|k-1) = \sum_{i=1}^{n} a_i y(k-i) + \sum_{j=0}^{m} b_j u(k-j) = \theta^{T} \varphi(k) \qquad \text{(eq.3')}$$

rewritten also as

$$y(k) + \varepsilon(k) = \sum_{i=1}^{n} a_i y(k-i) + \sum_{j=0}^{m} b_j u(k-j) \qquad .$$

where *y(k)* is the last measured sample or the desired model response at step k, and where

$$\varepsilon(k) = \hat{y}(k|k-1) - y(k)$$

is a prediction error or estimation error at step k.

Minimized is the sum of squared prediction errors as a function of the coefficients $a_i$ and $b_i$ stored in the parameter vector θ:

$$J = \min_{\theta} \sum \varepsilon^{T} \varepsilon = \min_{\theta} \sum \left[ \hat{y}(k|k-1) - y(k) \right]^{2} \qquad \text{(criterion)}$$

solving recursively:

$$d(k) = \varphi^{T}(k) K(k-1) \varphi(k) + Q_{m}$$
$$g(k) = \frac{K(k-1)\varphi(k)}{d(k)}$$
$$\hat{y}(k) = \varphi^{T}(k) \theta(k-1)$$
$$\varepsilon(k) = \hat{y}(k) - y(k)$$
$$\theta(k) = \theta(k-1) + \varepsilon(k) g(k)$$
$$K(k) = K(k-1) - g(k) \varphi^{T}(k) K(k-1) + Q_{p} \qquad \text{(Kalman Filter)}$$

where the additional variables have the following meaning:

K(k)    correlation matrix of the estimation error (must be symmetrical by definition).

G(k), d(k)     The vector of (Kalman) gains at step k and its denominator (to be inverted).

Qm        The correlation matrix of the measurement noise.

Qp        The correlation matrix of the process noise.

In the above parameter estimation, the problem as stated in (eq.2) is linear in the estimated parameters $\theta$. The mathematical details are disclosed in the priority document and the paper "Fast Parameter Estimation for Power System Protection" by P. Korba, VIII Symposium on Power System Protection (SIPSEP), Monterrey, Mexico, pp. 1-6, May 21-26, 2006, which are herewith included for all purposes by way of reference.

Fig.2 compares the performance of a classical phasor approach in the frequency domain based on the Fourier Transform (FT) with the performance of a direct parameter estimation approach in the time domain using adaptive Kalman Filtering (KF) techniques. It depicts the estimated impedance of the respective best results obtained with FT (dashed line, denoted FT) and KF (solid line, denoted KF) for a particular test case. The step function indicates the correct and in this case a-priori known value of the estimated line impedance before and after the fault at t = 0.6 sec. The time-domain approach proposed here shows better performance in terms of the speed of response and the achieved accuracy of the estimated parameters. In the test case presented, the proposed KF procedure needs only about ½ of the time compared to the standard FT approach and as little as 3 samples to estimate reliably power system parameters.

In addition, and contrary to classical FT, KF becomes even faster and more precise for increased sampling frequencies. Nevertheless, combinations of the time- and frequency-domain approach, i.e. a complementary usage of results obtained by means of Kalman Filter and Fourier Transform techniques, should remain possible.

**Claims**

1.  A method of detecting a fault in a power system, comprising

    - measuring repeatedly a dynamic system quantity ($y$) of the power system,
    - updating recursively, every time a new value ($y(k)$) of the dynamic system quantity ($y$) is measured and based on the new value ($y(k)$), a value of a non-frequency-selective physical parameter ($Z$; $R$, $X$) of a discrete-time physical model of the power system, and
    - analysing the updated value of the non-frequency-selective physical parameter ($Z$; $R$, $X$) to detect a fault in the power system.

2.  The method according to claim 1, **characterized in that** it comprises

    - updating recursively, every time a new value ($y(k)$) of the dynamic system quantity ($y$) is measured and based on the new value ($y(k)$), values of algebraic combinations ($\theta_1$, $\theta_2$) of a plurality of non-frequency-selective physical parameters ($R$, $L$), and
    - updating values of the non-frequency-selective physical parameters ($R$, $L$) from the updated values of the algebraic combinations ($\theta_1$, $\theta_2$).

3.  The method according to claim 1 or 2, **characterized in that** the discrete-time physical model of the power system is linear in the physical parameters ($R$, $L$) and/or the algebraic combinations ($\theta_1$, $\theta_2$) there of.

4.  The method according to claim 3, **characterized in that** the recursive updating involves adaptive filters, and preferably an adaptive Kalman Filter.

5.  The method according to one of the preceding claims, **characterized in that** the dynamic system quantity ($y$) is a time stamped phasor signal provided by a phasor measurement unit.

6.  A device for detecting faults in a power system, comprising

    - means for updating recursively, every time a new value ($y(k)$) of a dynamic system quantity ($y$) is measured and based on the new value ($y(k)$), a value of a non-frequency-selective physical parameter ($Z$; $R$, $X$) of a discrete-time physical model of the power system, and
    - means for analysing the updated value of the non-frequency-selective physical parameter ($Z$; $R$, $X$) to detect a fault in the power system.

**7.** The device according to claim 6, **characterized in that** it comprises

- means for updating recursively, every time a new value ($y(k)$) of the dynamic system quantity ($y$) is measured and based on the new value ($y(k)$), values of algebraic combinations ($\theta_1$, $\theta_2$) of a plurality of non-frequency-selective physical parameters ($R$, $L$), and
- means for updating values of the non-frequency-selective physical parameters ($R$, $L$) from the updated values of the algebraic combinations ($\theta_1$, $\theta_2$).

**8.** The device according to claim 6 or 7, **characterized in that** it comprises an adaptive Kalman Filter for recursively updating the value of a non-frequency-selective physical parameter ($Z$; $R$, $X$) of a discrete-time linear physical model of the power system, or for recursively updating the values of algebraic combinations ($\theta_1$, $\theta_2$) of a plurality of non-frequency-selective physical parameters ($R$, $L$).

**9.** A computer program product for detecting faults in electric power transmission systems, which program product is loadable into an internal memory of a digital computer, comprising computer program code means to make, when said program is loaded in said internal memory, the computer execute the method of detecting a fault in a power system according to one of claims 1 to 4.

**Patentansprüche**

**1.** Ein Verfahren zum Detektieren eines Fehlers in einem Stromsystem, umfassend:

- wiederholtes Messen einer dynamischen Systemgröße ($y$) des Stromsystems,
- rekursives Aktualisieren eines Werts eines nichtfrequenzselektiven physikalischen Parameters ($Z$; $R$, $X$) eines zeitdiskreten physikalischen Modells des Stromsystems immer dann, wenn eine neuer Wert ($y(k)$) der dynamischen Systemgröße ($y$) gemessen wird und auf der Basis des neuen Werts ($y(k)$), und
- Analysieren des aktualisierten Werts des nichtfrequenzselektiven physikalischen Parameters ($Z$; $R$, $X$), um einen Fehler in dem Stromsystem zu detektieren.

**2.** Verfahren nach Anspruch 1, **dadurch gekennzeichnet, daß** es folgendes umfaßt:

- rekursives Aktualisieren von Werten von algebraischen Kombinationen ($\theta_1$, $\theta_2$) von mehreren nichtfrequenzselektiven physikalischen Parametern ($R$, $L$) immer dann, wenn eine neuer Wert ($y(k)$) der dynamischen Systemgröße ($y$) gemessen wird und auf der Basis des neuen Werts ($y(k)$), und
- Aktualisieren von Werten der nichtfrequenzselektiven physikalischen Parameter ($R$, $L$) anhand der aktualisierten Werte der algebraischen Kombinationen ($\theta_1$, $\theta_2$).

**3.** Verfahren nach Anspruch 1 oder 2, **dadurch gekennzeichnet, daß** das zeitdiskrete physikalische Modell des Stromsystems in den physikalischen Parametern ($R$, $L$) und/oder den algebraischen Kombinationen ($\theta_1$, $\theta_2$) davon linear ist.

**4.** Verfahren nach Anspruch 3, **dadurch gekennzeichnet, daß** das rekursive Aktualisieren adaptive Filter und bevorzugt ein adaptives Kalman-Filter beinhaltet.

**5.** Verfahren nach einem der vorhergehenden Ansprüche, **dadurch gekennzeichnet, daß** die dynamische Systemgröße ($y$) ein von einer Phasormeßeinheit geliefertes zeitgestempeltes Phasorsignal ist.

**6.** Einrichtung zum Detektieren von Fehlern in einem Stromsystem, umfassend:

- Mittel zum rekursiven Aktualisieren eines Werts eines nichtfrequenzselektiven physikalischen Parameters ($Z$; $R$, $X$) eines zeitdiskreten physikalischen Modells des Stromsystems immer dann, wenn eine neuer Wert ($y(k)$) der dynamischen Systemgröße ($y$) gemessen wird und auf der Basis des neuen Werts ($y(k)$), und
- Mittel zum Analysieren des aktualisierten Werts des nichtfrequenzselektiven physikalischen Parameters ($Z$; $R$, $X$), um einen Fehler in dem Stromsystem zu detektieren.

**7.** Einrichtung nach Anspruch 6, **dadurch gekennzeichnet, daß** sie folgendes umfaßt:

- Mittel zum rekursiven Aktualisieren von Werten von algebraischen Kombinationen ($\theta_1$, $\theta_2$) von mehreren nichtfrequenzselektiven physikalischen Parametern (*R, L*) immer dann, wenn eine neuer Wert (*y(k)*) der dynamischen Systemgröße (*y*) gemessen wird und auf der Basis des neuen Werts (*y(k)*), und
- Mittel zum Aktualisieren von Werten der nichtfrequenzselektiven physikalischen Parameter (*R, L*) anhand der aktualisierten Werte der algebraischen Kombinationen ($\theta_1$, $\theta_2$).

**8.** Einrichtung nach Anspruch 6 oder 7, **dadurch gekennzeichnet, daß** sie ein adaptives Kalman-Filter zum rekursiven Aktualisieren des Werts eines nichtfrequenzselektiven physikalischen Parameters (*Z; R, X*) eines zeitdiskreten linearen physikalischen Modells des Stromsystems oder zum rekursiven Aktualisieren der Werte von algebraischen Kombinationen ($\theta_1$, $\theta_2$) von mehreren nichtfrequenzselektiven physikalischen Parametern (*R, L*) umfaßt.

**9.** Computerprogrammprodukt zum Detektieren von Fehlern in elektrischen Stromübertragungssystemen, wobei das Programmprodukt in einen internen Speicher eines Digitalrechners geladen werden kann, umfassend Computerprogrammcodemittel, um zu veranlassen, wenn das Programm in den internen Speicher geladen ist, daß der Computer das Verfahren zum Detektieren eines Fehlers in einem Stromsystem nach einem der Ansprüche 1 bis 4 ausführt.

**Revendications**

**1.** Procédé de détection d'un défaut dans un système d'alimentation, comprenant :

- la mesure répétée d'une grandeur système dynamique (*y*) du système d'alimentation,
- la mise à jour récursive, chaque fois qu'une nouvelle valeur (*y(k)*) de la grandeur système dynamique (*y*) est mesurée et en fonction de la nouvelle valeur (*y(k)*), d'une valeur d'un paramètre physique non sélectif en fréquence (*Z ; R, X*) d'un modèle physique discret dans le temps du système d'alimentation, et
- l'analyse de la valeur mise à jour du paramètre physique non sélectif en fréquence (*Z ; R, X*) pour détecter un défaut dans le système d'alimentation.

**2.** Procédé selon la revendication 1, **caractérisé en ce qu'**il comprend :

- la mise à jour récursive, chaque fois qu'une nouvelle valeur (*y(k)*) de la grandeur système dynamique (*y*) est mesurée et en fonction de la nouvelle valeur (*y(k)*), de valeurs de combinaisons algébriques ($\theta_1$, $\theta_2$) d'une pluralité de paramètres physiques non sélectifs en fréquence (*R, L*), et
- la mise à jour des valeurs de paramètres physiques non sélectifs en fréquence (*R, L*) à partir des valeurs mises à jour des combinaisons algébriques ($\theta_1$, $\theta_2$).

**3.** Procédé selon la revendication 1 ou 2,
**caractérisé en ce que** le modèle physique discret dans le temps du système d'alimentation est linéaire selon les paramètres physiques (*R, L*) et/ou leurs combinaisons algébriques ($\theta . \theta$).

**4.** Procédé selon la revendication 3, **caractérisé en ce que** la mise à jour récursive fait intervenir des filtres adaptatifs et de préférence, un filtre de Kalman adaptatif.

**5.** Procédé selon l'une des revendications précédentes, **caractérisé en ce que** la grandeur système dynamique (*y*) est un signal de phaseur marqué temporellement fourni par une unité de mesure de phaseur.

**6.** Dispositif pour détecter des défauts dans un système d'alimentation, comprenant :

- des moyens pour mettre à jour récursivement, chaque fois qu'une nouvelle valeur (*y(k)*) d'une grandeur système dynamique (*y*) est mesurée et en fonction de la nouvelle valeur (*y(k)*), une valeur d'un paramètre physique non sélectif en fréquence (*Z ; R, X*) d'un modèle physique discret dans le temps du système d'alimentation, et
- des moyens pour analyser la valeur mise à jour du paramètre physique non sélectif en fréquence (*Z ; R, X*) pour détecter un défaut dans le système d'alimentation.

**7.** Dispositif selon la revendication 6,
**caractérisé en ce qu'**il comprend :

- des moyens pour mettre à jour récursivement, chaque fois qu'une nouvelle valeur ($y(k)$) de la grandeur système dynamique ($y$) est mesurée et en fonction de la nouvelle valeur ($y(k)$), des valeurs de combinaisons algébriques ($\theta_1$, $\theta_2$) d'une pluralité de paramètres physiques non sélectifs en fréquence ($R, L$), et
- des moyens pour mettre à jour des valeurs des paramètres physiques non sélectifs en fréquence ($R, L$) à partir des valeurs mises à jour des combinaisons algébriques ($\theta_1$, $\theta_2$).

8. Dispositif selon la revendication 6 ou 7,
**caractérisé en ce qu'**il comprend un filtre de Kalman adaptatif pour mettre à jour récursivement la valeur d'un paramètre physique non sélectif en fréquence ($Z$ ; $R, X$) d'un modèle physique linéaire discret dans le temps du système d'alimentation, ou pour mettre à jour récursivement les valeurs de combinaisons algébriques ($\theta_1$, $\theta_2$) d'une pluralité de paramètres physiques non sélectifs en fréquence ($R, L$).

9. Produit à base de programme informatique pour détecter des défauts dans des systèmes de transmission d'énergie électrique, lequel produit à base de programme peut être chargé dans une mémoire interne d'un ordinateur numérique, comprenant un moyen à base de code de programme informatique pour faire en sorte que, lorsque ledit programme est chargé dans ladite mémoire interne, l'ordinateur exécute le procédé de détection d'un défaut dans un système d'alimentation selon l'une des revendications 1 à 4.

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4455612 A

- EP 1489714 A

**Non-patent literature cited in the description**

- **P. Korba.** Fast Parameter Estimation for Power System Protection. *VIII Symposium on Power System Protection (SIPSEP),* 21 May 2006, 1-6